# EUROPEAN PATENT APPLICATION

(11) **EP 4 823 059 A1**
(43) Date of publication of application: **14.10.2026**
(21) Application number: 24909778.3
(22) Date of filing: 06.08.2024
(51) Int. Cl.: H04L 47/50

(54) **COMMUNICATION SYSTEM, COMMUNICATION METHOD, AND APPARATUS**

(30) Priority: 29.12.2023 CN 202311863142
(71) Applicant: Huawei Technologies Co., Ltd., Shenzhen, Guangdong 518129 (CN)
(72) Inventor: JIA, Xitong, Shenzhen, Guangdong 518129 (CN); CHEN, Fei, Shenzhen, Guangdong 518129 (CN); GAO, Yixiao, Shenzhen, Guangdong 518129 (CN); WANG, Weiguang, Shenzhen, Guangdong 518129 (CN); WANG, Qiaoling, Shenzhen, Guangdong 518129 (CN); YAO, Jianye, Shenzhen, Guangdong 518129 (CN)
(74) Representative: Gill Jennings & Every LLP
(86) International application number: PCT/CN2024/110149
(87) International publication number: WO 2025/138824

(57) **Abstract**

This application provides a communication system, a communication method, and an apparatus, relating to the communication field. This application is used to improve resource utilization efficiency during execution of a coflow service. The communication system includes a sending node, a first receiving node, and a second receiving node. The sending node is configured to send a first subflow to the first receiving node, where the first subflow includes a first priority identifier. The sending node is further configured to send a second subflow to the second receiving node, where the second subflow includes a second priority identifier. The first subflow and the second subflow belong to a same coflow. The first receiving node is configured to prioritize processing of the first subflow based on a first priority corresponding to the first priority identifier. The second receiving node is configured to defer processing of the second subflow based on a second priority corresponding to the second priority identifier.

## Description

This application claims priority to Chinese Patent Application No. 202311863142.6, filed with the China National Intellectual Property Administration on December 29, 2023 and entitled "COMMUNICATION SYSTEM, COMMUNICATION METHOD, AND APPARATUS", which is incorporated herein by reference in its entirety.

### TECHNICAL FIELD

This application relates to the communication field, and in particular, to a communication system, a communication method, and an apparatus.

### BACKGROUND

A coflow (coflow) is a set of data flows that collaborate with each other. Each individual data flow within a coflow is referred to as a subflow. The coflow completion time (coflow completion time, CCT) is determined by the latest completion time of subflows in the coflow.

Compared with the transmission of a single data flow, a coflow involves a plurality of subflows that collaborate with each other, making its transmission process more complex and resources-intensive. Therefore, how to improve resource utilization efficiency during execution of a coflow service is a problem that needs to be resolved currently.

### SUMMARY

This application provides a communication system, a communication method, and an apparatus, to improve resource utilization efficiency during execution of a coflow service.

According to a first aspect, a communication system is provided. The communication system includes a sending node, a first receiving node, and a second receiving node. The sending node is configured to send a first subflow to the first receiving node, where the first subflow includes a first priority identifier. The sending node is further configured to send a second subflow to the second receiving node, where the second subflow includes a second priority identifier. The first subflow and the second subflow belong to a same coflow (Coflow). The first receiving node is configured to prioritize processing of the first subflow based on a first priority corresponding to the first priority identifier. The second receiving node is configured to defer processing of the second subflow based on a second priority corresponding to the second priority identifier, such that a time difference between a completion time of processing the first subflow by the first receiving end and a completion time of processing the second subflow by the second receiving end satisfies at least one of the following: being less than a time difference between a completion time of processing the first subflow by the first receiving node based on the first priority and a completion time of processing the second subflow by the second receiving node based on the first priority, and being less than a time difference between a completion time of processing the first subflow by the first receiving node based on the second priority and a completion time of processing the second subflow by the second receiving node based on the second priority.

In the foregoing method in this application, when sending subflows to receiving nodes, the sending node may include priority identifiers in the subflows. Further, the receiving nodes may process the subflows based on priorities corresponding to the priority identifiers. In an aspect, some receiving nodes may prioritize processing of subflows based on a higher priority (to be specific, the first receiving node prioritizes processing of the subflow based on the first priority corresponding to the first priority identifier). In another aspect, the other receiving nodes may defer processing of subflows based on a lower priority (to be specific, the second receiving node defers processing of the subflow based on the second priority corresponding to the second priority identifier). In this way, the time difference between the completion time of processing the first subflow by the first receiving node and the completion time of processing the second subflow by the second receiving node satisfies at least one of the following: being less than the time difference between the completion time of processing the first subflow by the first receiving node based on the first priority and the completion time of processing the second subflow by the second receiving node based on the first priority, and being less than the time difference between the completion time of processing the first subflow by the first receiving node based on the second priority and the completion time of processing the second subflow by the second receiving node based on the second priority. In this way, in comparison with processing the subflows by the first receiving node and the second receiving node based on a same priority, the foregoing method in this application may reduce a time difference in completing processing of subflows by different receiving nodes, so that resource utilization efficiency of the receiving nodes is improved.

In an implementation, the communication system is a distributed storage system, and the first receiving node and the second receiving node are each a storage node in the distributed storage system.

In the foregoing implementation, the following is considered: In the distributed storage system, data may be stored in a plurality of storage nodes in the distributed storage system in a coflow manner. For example, when data is stored in a multi-replica manner, a plurality of data replicas may be respectively sent, in a coflow manner, to different storage nodes for storage. For another example, when data is stored in an erasure code (erasure code, EC) manner, a data block and a check block in an EC code block may be respectively sent, in a coflow manner, to different storage nodes for storage. Therefore, when the first receiving node and the second receiving node are each a storage node in the distributed storage system, a time difference between the time for the first receiving node to perform data storage and the time for the second receiving node to perform data storage may be reduced when the distributed storage system stores, in a coflow manner, data in storage nodes including the first receiving node and the second receiving node, so that resource utilization efficiency of the storage nodes is improved.

In an implementation, the distributed storage system includes a hard disk. The hard disk includes a network interface card, a processor, and a storage medium. The first receiving node and/or the second receiving node are each a hard disk in the distributed storage system. When the first receiving node is a first hard disk in the distributed storage system, the network interface card in the first hard disk is configured to receive the first subflow, the processor in the first hard disk is configured to prioritize processing of the first subflow based on the first priority identifier, and the storage medium in the first hard disk is configured to store data in the first subflow. When the second receiving node is a second hard disk in the distributed storage system, the network interface card in the second hard disk is configured to receive the second subflow, the processor in the second hard disk is configured to defer processing of the second subflow based on the second priority identifier, and the storage medium in the second hard disk is configured to store the data in the first subflow.

In the foregoing implementation, a time difference between the time for the hard disk to perform data storage and the time for another storage node to perform data storage may be reduced when the distributed storage system stores, in a coflow manner, data in storage nodes including the hard disk, so that resource utilization efficiency of the hard disk and other storage nodes is improved.

In an implementation, the communication system is a distributed storage system, and the first receiving node and the second receiving node are each a transmission node connected to a storage node in the distributed storage system.

In the foregoing implementation, the following is considered: When the storage node accesses the distributed storage system via the transmission node, after receiving a subflow sent to each storage node, each transmission node may process the subflow based on a priority corresponding to a priority identifier in the subflow (for example, send the subflow to the storage node based on the priority corresponding to the priority identifier in the subflow), so that utilization efficiency of scheduling resources of each transmission node and each storage node can be improved.

In an implementation, the sending node is further configured to determine the first priority identifier based on historical flow completion times (flow completion times, FCTs) when n receiving nodes corresponding to the coflow process data flows from the sending node, where n is a positive integer greater than 1.

In the foregoing implementation, a priority identifier (which may be specifically the first priority identifier included in the first subflow) included in a subflow is determined based on historical FCTs when n receiving nodes corresponding to a coflow K process data flows from the sending node. In this way, a processing completion time of processing the first subflow by the first receiving node based on the priority corresponding to the first priority identifier may be close to a completion time of processing a subflow by another receiving node in the n receiving nodes, so that a time difference in completing processing of the subflows is reduced. In this way, resource utilization efficiency of the receiving nodes can be improved.

In an implementation, that the sending node is further configured to determine the first priority identifier based on the historical FCTs when the n receiving nodes corresponding to the coflow process the data flows from the sending node includes: The sending node is further configured to determine a reference duration based on the historical FCTs when the n receiving nodes corresponding to the coflow process the data flows from the sending node, where the reference duration indicates a CCT of the coflow. The sending node is further configured to determine, from a first FCT set, a first FCT that is less than the reference duration and closest to the reference duration. The first FCT set includes historical FCTs corresponding to processing of the data flow from the sending node by the first receiving node based on different priorities. The sending node is further configured to determine the first priority identifier based on a priority corresponding to the first FCT.

In the foregoing implementation, the following is considered: In an aspect, the CCT of the coflow may be predicted by using the historical FCTs when the n receiving nodes corresponding to the coflow process the data flows from the sending node, so that the reference duration indicating the CCT of the coflow is determined. In another aspect, FCTs when the receiving nodes process the subflows can be less than the reference duration and as close as possible to the reference duration. In this way, a time difference in completing processing of subflows in a coflow K can be reduced. Further, in the foregoing implementation, in an aspect, the reference duration is determined based on the historical FCTs when the n receiving nodes corresponding to the coflow process the data flows from the sending node. In another aspect, the first FCT that is less than the reference duration and closest to the reference duration is selected from the first FCT set, and the first priority identifier is determined based on the priority corresponding to the first FCT. In this way, when the first receiving node processes the first subflow based on the first priority identifier, an FCT of the first subflow can be as close as possible to the reference duration. When all FCTs of a plurality of subflows are as close as possible to the reference duration in the foregoing manner, a time difference in completing processing of the subflows can be reduced. In this way, resource utilization efficiency of the receiving nodes can be improved.

According to a second aspect, a communication method is provided. The communication method is applied to a communication system, the communication system includes a sending node, a first receiving node, and a second receiving node, and the method includes: The sending node sends a first subflow to the first receiving node, where the first subflow includes a first priority identifier. The sending node sends a second subflow to the second receiving node, where the second subflow includes a second priority identifier, and the first subflow and the second subflow belong to a same coflow. The first receiving node prioritizes processing of the first subflow based on a first priority corresponding to the first priority identifier. The second receiving node defers processing of the second subflow based on a second priority corresponding to the second priority identifier, such that a time difference between a completion time of processing the first subflow by the first receiving node and a completion time of processing the second subflow by the second receiving node satisfies at least one of the following: being less than a time difference between a completion time of processing the first subflow by the first receiving node based on the first priority and a completion time of processing the second subflow by the second receiving node based on the first priority, and being less than a time difference between a completion time of processing the first subflow by the first receiving node based on the second priority and a completion time of processing the second subflow by the second receiving node based on the second priority.

In an implementation, the method further includes: The sending node determines the first priority identifier based on historical FCTs when n receiving nodes corresponding to the coflow process data flows from the sending node, where n is a positive integer greater than 1.

In an implementation, that the sending node determines the first priority identifier based on the historical FCTs when the n receiving nodes corresponding to the coflow process the data flows from the sending node includes: The sending node determines a reference duration based on the historical FCTs when the n receiving nodes corresponding to the coflow process the data flows from the sending node, where the reference duration indicates a CCT of the coflow. The sending node determines, from a first FCT set, a first FCT that is less than the reference duration and closest to the reference duration, where the first FCT set includes historical FCTs corresponding to processing of the data flow from the sending node by the first receiving node based on different priorities. The sending node determines the first priority identifier based on a priority corresponding to the first FCT.

In an implementation, the communication system is a distributed storage system, and the first receiving node and the second receiving node are each a storage node in the distributed storage system.

In an implementation, the communication system is a distributed storage system, and the first receiving node and the second receiving node are each a transmission node connected to a storage node in the distributed storage system.

According to a third aspect, a communication system is provided. The communication system includes a first receiving node and a second receiving node. The first receiving node is configured to receive a first subflow from a sending node, where the first subflow includes a first priority identifier. The second receiving node is configured to receive a second subflow from the sending node, where the second subflow includes a second priority identifier, and the first subflow and the second subflow belong to a same coflow. The first receiving node is further configured to prioritize processing of the first subflow based on a first priority corresponding to the first priority identifier. The second receiving node is further configured to defer processing of the second subflow based on a second priority corresponding to the second priority identifier, such that a time difference between a completion time of processing the first subflow by the first receiving node and a completion time of processing the second subflow by the second receiving node satisfies at least one of the following: being less than a time difference between a completion time of processing the first subflow by the first receiving node based on the first priority and a completion time of processing the second subflow by the second receiving node based on the first priority, and being less than a time difference between a completion time of processing the first subflow by the first receiving node based on the second priority and a completion time of processing the second subflow by the second receiving node based on the second priority.

In an implementation, the communication system is a distributed storage system, and the first receiving node and the second receiving node are each a storage node in the distributed storage system.

In an implementation, the distributed storage system includes a hard disk. The hard disk includes a network interface card, a processor, and a storage medium. The first receiving node and/or the second receiving node are each a hard disk in the distributed storage system. When the first receiving node is a first hard disk in the distributed storage system, the network interface card in the first hard disk is configured to receive the first subflow, the processor in the first hard disk is configured to prioritize processing of the first subflow based on the first priority identifier, and the storage medium in the first hard disk is configured to store data in the first subflow. When the second receiving node is a second hard disk in the distributed storage system, the network interface card in the second hard disk is configured to receive the second subflow, the processor in the second hard disk is configured to defer processing of the second subflow based on the second priority identifier, and the storage medium in the second hard disk is configured to store the data in the first subflow.

In an implementation, the communication system is a distributed storage system, and the first receiving node and the second receiving node are each a transmission node connected to a storage node in the distributed storage system.

According to a fourth aspect, a communication method is provided. The communication method is applied to a communication system, and the communication system includes a first receiving node and a second receiving node. The method includes: The first receiving node receives a first subflow from a sending node, where the first subflow includes a first priority identifier. The second receiving node receives a second subflow from the sending node, where the second subflow includes a second priority identifier, and the first subflow and the second subflow belong to a same coflow. The first receiving node prioritizes processing of the first subflow based on a first priority corresponding to the first priority identifier. The second receiving node defers processing of the second subflow based on a second priority corresponding to the second priority identifier, such that a time difference between a completion time of processing the first subflow by the first receiving node and a completion time of processing the second subflow by the second receiving node satisfies at least one of the following: being less than a time difference between a completion time of processing the first subflow by the first receiving node based on the first priority and a completion time of processing the second subflow by the second receiving node based on the first priority, and being less than a time difference between a completion time of processing the first subflow by the first receiving node based on the second priority and a completion time of processing the second subflow by the second receiving node based on the second priority.

In an implementation, the communication system is a distributed storage system, and the first receiving node and the second receiving node are each a storage node in the distributed storage system.

In an implementation, the distributed storage system includes a hard disk. The hard disk includes a network interface card, a processor, and a storage medium. The first receiving node and/or the second receiving node are each a hard disk in the distributed storage system. When the first receiving node is a first hard disk in the distributed storage system, the network interface card in the first hard disk is configured to receive the first subflow, the processor in the first hard disk is configured to prioritize processing of the first subflow based on the first priority identifier, and the storage medium in the first hard disk is configured to store data in the first subflow. When the second receiving node is a second hard disk in the distributed storage system, the network interface card in the second hard disk is configured to receive the second subflow, the processor in the second hard disk is configured to defer processing of the second subflow based on the second priority identifier, and the storage medium in the second hard disk is configured to store the data in the first subflow.

In an implementation, the communication system is a distributed storage system, and the first receiving node and the second receiving node are each a transmission node connected to a storage node in the distributed storage system.

According to a fifth aspect, a computer-readable storage medium is provided. The storage medium stores a computer program. When the computer program is executed by a sending node and a receiving node in a communication system, the method according to any one of the second aspect or the implementations of the second aspect or any one of the fourth aspect or the implementations of the fourth aspect is implemented.

According to a sixth aspect, a computer program product is provided. The computer program product includes instructions. When the instructions are run on a sending node and a receiving node in a communication system, the method according to any one of the second aspect or the implementations of the second aspect or any one of the fourth aspect or the implementations of the fourth aspect is implemented.

### BRIEF DESCRIPTION OF DRAWINGS

FIG. 1 is a first diagram of a structure of a communication system according to an embodiment of this application;
FIG. 2 is a first diagram of a running procedure of a communication system according to an embodiment of this application;
FIG. 3a and FIG. 3b are a second diagram of a running procedure of a communication system according to an embodiment of this application;
FIG. 4a and FIG. 4b are a third diagram of a running procedure of a communication system according to an embodiment of this application;
FIG. 5 is a fourth diagram of a running procedure of a communication system according to an embodiment of this application;
FIG. 6 is a second diagram of a structure of a communication system according to an embodiment of this application;
FIG. 7 is a first diagram of a structure of a distributed storage system according to an embodiment of this application;
FIG. 8 is a second diagram of a structure of a distributed storage system according to an embodiment of this application;
FIG. 9 is a third diagram of a structure of a distributed storage system according to an embodiment of this application;
FIG. 10 is a fifth diagram of a running procedure of a communication system according to an embodiment of this application; and
FIG. 11 is a sixth diagram of a running procedure of a communication system according to an embodiment of this application.

### DESCRIPTION OF EMBODIMENTS

The following describes technical solutions in embodiments of this application with reference to accompanying drawings in embodiments of this application.

Currently, with development of computer technologies, many services are implemented in a coflow (coflow) manner. For example, in cloud computing, collaborative computing of a plurality of compute nodes may be implemented in a coflow manner. Specifically, in a cloud computing system, a sending node (where for example, the sending node may be a management node in the cloud computing system) may send subflows to the plurality of compute nodes. Then, the plurality of compute nodes process the subflows, and send feedback messages to the sending node after completing the processing. After receiving the feedback messages from the compute nodes, the sending node determines that a coflow is completed and releases a memory resource. A coflow completion time (coflow completion time, CCT) of the coflow is determined by the latest processing completion time across the plurality of compute nodes.

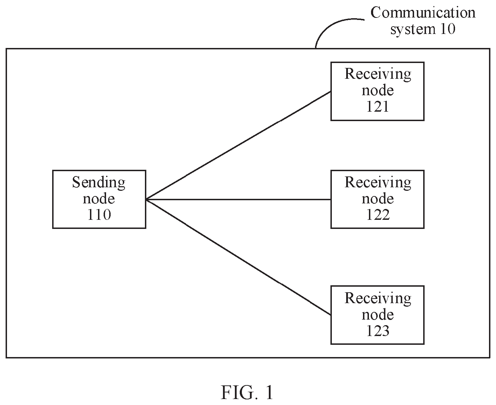

The following uses a communication system shown in FIG. 1 as an example to describe an implementation process of a coflow in a related technology. As shown in FIG. 1, the communication system 10 includes a sending node 110 and a plurality of receiving nodes (for example, a receiving node 121, a receiving node 122, and a receiving node 123 in the figure).

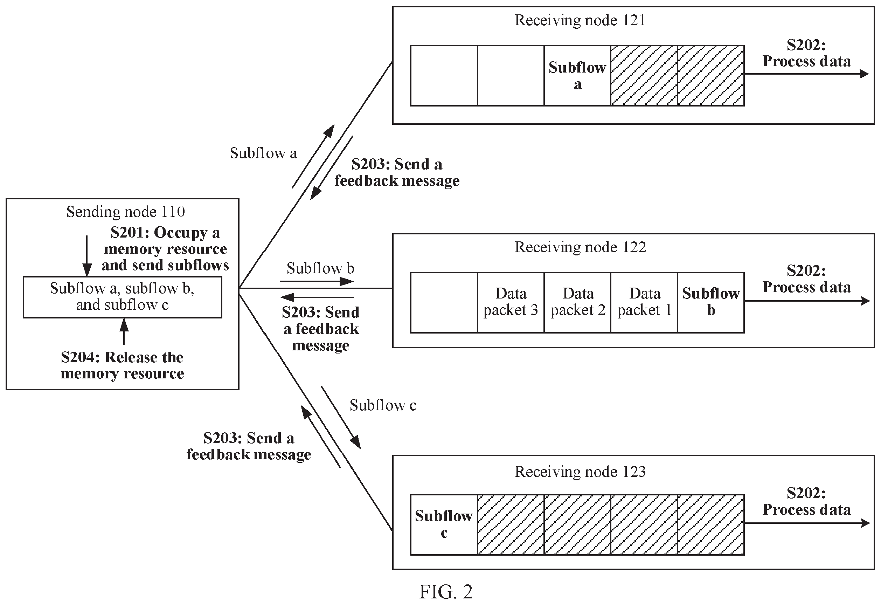

When the communication system 10 is applied to a cloud computing scenario, the sending node 110 may be a management node that is in a cloud computing system and that is configured to deliver a compute task to each compute node, and each receiving node may be a compute node in the cloud computing system. An execution process of the coflow is shown in FIG. 2, and includes the following steps.

S201: The sending node 110 occupies a memory resource, and sends subflows (to be specific, a subflow a, a subflow b, and a subflow c) to the receiving nodes respectively.

Each subflow may include one or more data packets.

S202: The receiving nodes process the received subflows based on priorities in a scheduling policy.

Specifically, when the receiving node needs to process a plurality of tasks at the same time, each receiving node may determine a priority of a data packet in each task according to a corresponding scheduling policy (for example, a strict priority (strict priority, SP) scheduling policy, a weighted round robin (weighted round robin, WRR) scheduling policy, or a deficit weighted round robin (deficit weighted round robin, DWRR) scheduling policy), and process the data packet based on the priority.

When the receiving nodes process the received subflows based on a same priority in the scheduling policy, for different subflows in the coflow, due to factors such as different loads of the receiving nodes, it is possible that some receiving nodes process subflows earlier, and the other receiving nodes process subflows later.

For example, in a scenario shown in FIG. 2, it is assumed that a load of the receiving node 123 is the largest, a load of the receiving node 122 is the smallest, and a load of the receiving node 121 is between the two loads. In this case, when the three receiving nodes process the subflow a, the subflow b, and the subflow c based on the same priority in the scheduling policy, a sequence of processing the subflows by the receiving nodes is as follows: 1. The receiving node 121 processes first two data packets (represented by shadow blocks in the figure), and then processes the subflow a. 2. The receiving node 122 may directly process the subflow b without waiting. 3. The receiving node 123 processes first four data packets (represented by shadow blocks in the figure), and then processes the subflow c.

S203: After completing data processing, the receiving nodes send feedback messages to the sending node 110.

For example, after completing processing of the subflow a, the receiving node 121 sends a feedback message to the sending node 110; after completing processing of the subflow b, the receiving node 122 sends a feedback message to the sending node 110; and after completing processing of the subflow c, the receiving node 123 sends a feedback message to the sending node 110. Specifically, in the example in FIG. 2, the receiving node 122 is to complete data processing earliest, and therefore the receiving node 122 sends the feedback message to the sending node 110 earliest. The receiving node 123 is to complete data processing latest, and therefore the receiving node 123 sends the feedback message to the sending node 110 latest. The time when the receiving node 121 sends the feedback message to the sending node 110 falls between the earliest time and the latest time.

S204: After receiving the feedback messages from the receiving nodes, the sending node 110 determines that execution of the coflow is completed, and releases the memory resource.

It can be learned that, in the execution process of the coflow shown in FIG. 2, there is a time difference in completing processing of the subflows by the receiving nodes. In this case, for a receiving node that completes data processing earlier, there may be a waste of a scheduling resource.

The receiving node 122 is used as an example. Because the sending node 110 releases the memory resource only after determining that all the receiving nodes complete data processing (in other words, a CCT of the coflow is determined by the latest completion time of the subflows), the CCT of the coflow is not reduced even though the receiving node 122 can process the subflow b earlier. In other words, if the receiving node 122 can first process a data packet of another service (for example, the receiving node 122 first processes a data packet 1, a data packet 2, and a data packet 3 in FIG. 2), and then process the subflow b when another receiving node processes a subflow (for example, when the receiving node 123 processes the subflow c), it can be ensured that a speed of processing the other service by the receiving node 122 can be improved without increasing the CCT of the coflow, so that utilization efficiency of a scheduling resource in the receiving node 122 is improved.

For the foregoing problem, an embodiment of this application provides a technical solution. In the technical solution, during execution of a coflow service, when sending subflows to receiving nodes, a sending node may include priority identifiers in the subflows. Further, the receiving nodes may process the subflows based on priorities corresponding to the priority identifiers. In an aspect, some receiving nodes may prioritize processing of subflows based on a higher priority (for example, a receiving node with a higher load may process a subflow based on the higher priority). In another aspect, the other receiving nodes may defer processing of subflows based on a lower priority (for example, a receiving node with a lower load may defer processing of a subflow based on the lower priority). In this way, a time difference in completing processing of subflows by different receiving nodes can be reduced, so that resource utilization efficiency is improved.

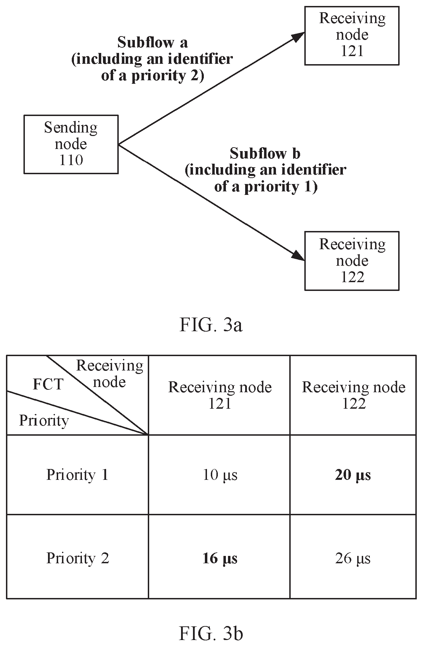

For example, as shown in FIG. 3a, a coflow service includes a subflow a sent by a sending node 110 to a receiving node 121 and a subflow b sent by the sending node 110 to a receiving node 122. As shown in FIG. 3b, it is assumed that in this case, an FCT of sending data to the receiving node 121 by the sending node 110 and processing the data by the receiving node 121 based on a priority 1 in a scheduling policy is 10 µs (which may be understood as that in this case, the time from sending the data by the sending node 110 to completing data processing by the receiving node is 10 µs), an FCT of sending the data to the receiving node 121 by the sending node 110 and processing the data by the receiving node 121 based on a priority 2 in the scheduling policy is 16 µs, an FCT of sending data to the receiving node 122 by the sending node 110 and processing the data by the receiving node 122 based on the priority 1 in the scheduling policy is 20 µs, and an FCT of sending the data to the receiving node 121 by the sending node 110 and processing the data by the receiving node 122 based on the priority 2 in the scheduling policy is 26 µs.

In this case, in this embodiment of this application, an identifier of the priority 2 may be included in the subflow a sent by the sending node 110 to the receiving node 121, and an identifier of the priority 1 may be included in the subflow b sent by the sending node 110 to the receiving node 122. Further, after receiving the subflow a, the receiving node 121 may prioritize processing of the subflow a based on the priority 2; and after receiving the subflow b, the receiving node 122 may defer processing of the subflow b based on the priority 1.

It can be learned that, in comparison with a time difference of 10 µs (namely, 20 µs minus 10 µs) in completing processing of the subflow a and the subflow b by the two receiving nodes both based on the priority 1 and a time difference of 10 µs (namely, 26 µs minus 16 µs) in completing processing of the subflow a and the subflow b by the two receiving nodes both based on the priority 2, the time difference in completing processing of the subflows by the two receiving nodes can be reduced to 4 µs (namely, 20 µs minus 16 µs) in the foregoing process in this embodiment of this application.

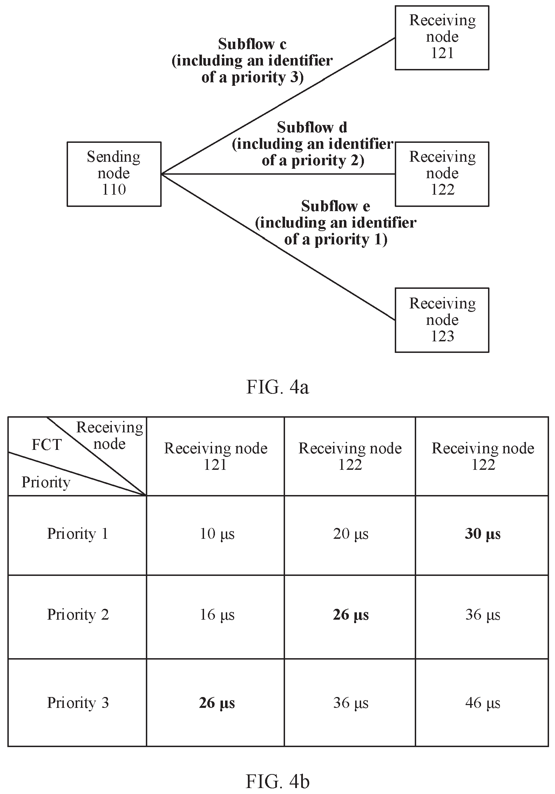

For another example, as shown in FIG. 4a, a coflow service includes a subflow c sent by a sending node 110 to a receiving node 121, a subflow d sent by the sending node 110 to a receiving node 122, and a subflow e sent by the sending node 110 to a receiving node 123. It is assumed that in this case, FCTs when the receiving nodes process data based on different priorities in a scheduling policy are shown in FIG. 4b.

In this case, in this embodiment of this application, an identifier of a priority 3 may be included in the subflow c sent by the sending node 110 to the receiving node 121, an identifier of a priority 2 may be included in the subflow d sent by the sending node 110 to the receiving node 122, and an identifier of a priority 1 may be included in the subflow e sent by the sending node 110 to the receiving node 123. Further, after receiving the subflow c, the receiving node 121 may process the subflow c based on the priority 3; after receiving the subflow d, the receiving node 122 may process the subflow d based on the priority 2; and after receiving the subflow e, the receiving node 123 may process the subflow e based on the priority 1.

Similar to the example shown in FIG. 3a and FIG. 3b, in the example shown in FIG. 4a and FIG. 4b, in comparison with processing the subflows by the receiving nodes based on the same priority, a time difference in processing subflows by different receiving nodes can be reduced in the foregoing process in this embodiment of this application.

Based on the foregoing content, an embodiment of this application provides a communication system. For a structure of the communication system, refer to the communication system 10 shown in FIG. 1. The communication system 10 may include a sending node 110 and a plurality of receiving nodes (for example, the three receiving nodes: the receiving node 121, the receiving node 122, and the receiving node 123 in FIG. 1).

The sending node 110 may respectively send subflows in a coflow to the receiving nodes in a manner provided below in this embodiment of this application. The receiving nodes may respectively process the received subflows in a manner provided below in this embodiment of this application.

In an actual application process, in the communication system 10 provided in this embodiment of this application, functions of the sending node 110 and each receiving node may be implemented by an electronic device like a personal computer (including a desktop computer, a laptop computer, a handheld computer, a notebook computer, and the like), an ultra-mobile personal computer (ultra-mobile personal computer, UMPC), a network interface card, or a server. Alternatively, the functions of the sending node 110 and each receiving node may be implemented by a hardware apparatus (for example, a chip) or a software apparatus (for example, a virtual machine) running on the foregoing electronic device.

In addition, the sending node 110 and the receiving nodes may be connected over a transmission network. A structure and a type of the transmission network may not be limited in embodiments of this application.

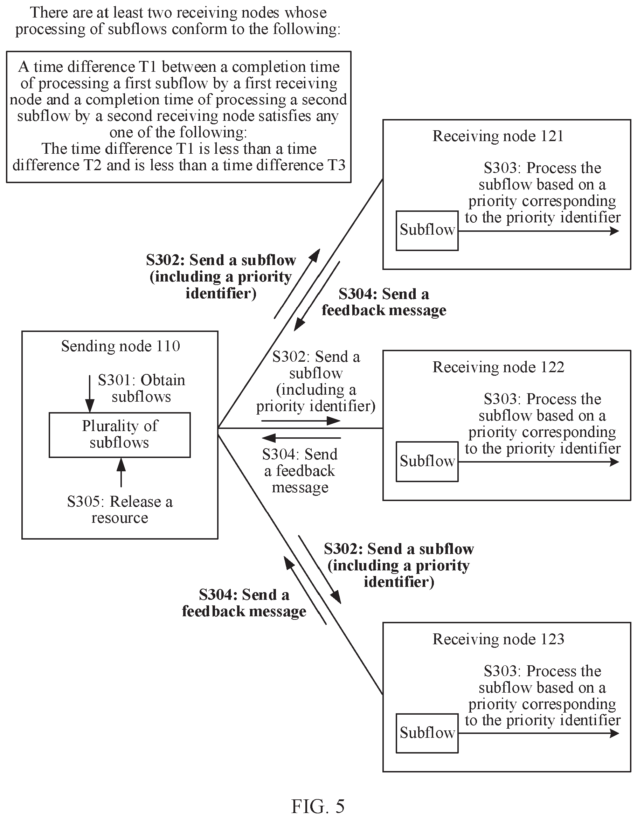

The following describes in detail a running process in which the communication system 10 executes a coflow service in this embodiment of this application. As shown in FIG. 5, the running process of the communication system 10 may include the following steps.

S301: A sending node 110 obtains subflows included in a coflow K.

For example, the sending node 110 may obtain, from a related application program at an application layer, data that needs to be collaboratively processed by a plurality of receiving nodes, and process the data to obtain the subflows in the coflow K.

For another example, the sending node 110 may alternatively receive, from another node, a plurality of subflows included in the coflow K. For example, when the sending node 110 is a control node in a cloud computing system, the sending node 110 may receive, from a client that establishes a connection to the cloud computing system, the plurality of subflows included in the coflow K.

S302: The sending node 110 sends the subflows to a plurality of receiving nodes.

The subflows respectively include priority identifiers. The priority identifiers indicate the receiving nodes to process the subflows based on priorities corresponding to the priority identifiers.

For example, in the example shown in FIG. 3a and FIG. 3b, the identifier of the priority 2 is included in the subflow a sent by the sending node 110 to the receiving node 121, to indicate the receiving node 121 to process the subflow based on the priority 2; and the identifier of the priority 1 is included in the subflow b sent by the sending node 110 to the receiving node 122, to indicate the receiving node 122 to process the subflow based on the priority 1.

For another example, in the example shown in FIG. 4a and FIG. 4b, the identifier of the priority 3 is included in the subflow c sent by the sending node 110 to the receiving node 121, the identifier of the priority 2 is included in the subflow d sent by the sending node 110 to the receiving node 122, and the identifier of the priority 1 is included in the subflow e sent by the sending node 110 to the receiving node 123.

In addition, a process in which the sending node 110 determines the priority identifiers included in the subflows is described in detail below by using S601 and S602. Details are not described herein.

S303: The receiving nodes process the subflows based on the priorities corresponding to the priority identifiers included in the subflows.

For example, in the example shown in FIG. 3a and FIG. 3b, the receiving node 121 processes the subflow a based on the priority 2 (to be specific, the priority corresponding to the priority identifier included in the subflow a); and the receiving node 122 processes the subflow b based on the priority 1 (to be specific, the priority corresponding to the priority identifier included in the subflow b).

For another example, in the example shown in FIG. 4a and FIG. 4b, the receiving node 121 processes the subflow c based on the priority 3 (to be specific, the priority corresponding to the priority identifier included in the subflow c); the receiving node 122 processes the subflow d based on the priority 2 (to be specific, the priority corresponding to the priority identifier included in the subflow d); and the receiving node 123 processes the subflow e based on the priority 1 (to be specific, the priority corresponding to the priority identifier included in the subflow e).

In this embodiment of this application, according to different scheduling policies used by receiving nodes, priorities corresponding to priority identifiers may be priorities in different scheduling policies.

For example, when the receiving nodes use an SP scheduling policy to determine a data processing sequence, the priorities corresponding to the priority identifiers may be priorities in the SP scheduling policy. For example, the priority 1 and the priority 2 in the example shown in FIG. 3a and FIG. 3b and the priority 1, the priority 2, and the priority 4 in the example shown in FIG. 4a and FIG. 4b each may be a priority in the SP scheduling policy. Further, the receiving nodes may process the subflows based on the priorities corresponding to the priority identifiers in the SP scheduling policy.

Similarly, when the receiving nodes use another scheduling policy like a WRR scheduling policy or a DWRR scheduling policy, the priorities corresponding to the priority identifiers may be priorities in another scheduling policy like the DWRR scheduling policy. The scheduling policy used by the receiving nodes is not limited in embodiments of this application.

In addition, in this embodiment of this application, processing the subflows may be understood as follows: The receiving nodes determine a sequence of processing the subflows based on the corresponding priorities (to be specific, the priorities corresponding to the priority identifiers included in the subflows received by the receiving nodes) according to a scheduling policy, and perform subsequent operations (for example, sending data in the subflows up to the application layer for operations such as calculation and storage) on the subflows based on the scheduling sequence.

In this embodiment of this application, in the receiving nodes, there may be at least two receiving nodes whose processing of subflows conform to the following processes S3031 and S3032 in which a first receiving node processes a first subflow and a second receiving node processes a second subflow.

S3031: The first receiving node prioritizes processing of the first subflow based on a first priority corresponding to a first priority identifier (to be specific, a priority identifier included in the first subflow).

S3032: The second receiving node defers processing of the second subflow based on a second priority corresponding to a second priority identifier (to be specific, a priority identifier included in the second subflow).

A time difference T1 between the time for the first receiving node to complete processing of the first subflow and the time for the second receiving node to complete processing of the second subflow satisfies a target condition.

The target condition includes at least one of the following: The time difference T1 is less than a time difference T2 between the time for the first receiving node to complete processing of the first subflow based on the first priority and the time for the second receiving node to complete processing of the second subflow based on the first priority, and the time difference T1 is less than a time difference T3 between the time for the first receiving node to complete processing of the first subflow based on the second priority and the time for the second receiving node to complete processing of the second subflow based on the second priority.

For example, the first receiving node may be the receiving node 122 in FIG. 3a and FIG. 3b, and the second receiving node may be the receiving node 121 in FIG. 3a and FIG. 3b. The receiving node 122 prioritizes processing of the subflow b (namely, the first subflow) based on the priority 1, and the receiving node 121 defers processing of the subflow a (namely, the second subflow) based on the priority 2. The time difference T1 between the time for the receiving node 122 to complete processing of the subflow b and the time for the receiving node 121 to complete processing of the subflow a is 4 µs (namely, 20 µs minus 16 µs). The time difference T1 is less than the time difference T2 (20 µs-10 µs=10 µs) in completing processing of the subflow b and the subflow a by the two receiving nodes both based on the priority 1 and the time difference T3 (26 µs-16 µs=10 µs) in processing the subflow b and the subflow a by the two receiving nodes both based on the priority 2.

For another example, the first receiving node may be the receiving node 123 in FIG. 4a and FIG. 4b, and the second receiving node may be the receiving node 122 in FIG. 4a and FIG. 4b. The receiving node 123 prioritizes processing of the subflow e (namely, the first subflow) based on the priority 1, and the receiving node 122 defers processing of the subflow d (namely, the second subflow) based on the priority 2. The time difference between the time for the receiving node 123 to complete processing of the subflow e and the time for the receiving node 122 to complete processing of the subflow d is 4 µs (namely, 30 µs minus 26 µs). The time difference T1 is less than the time difference T2 (30 µs-20 µs=10 µs) in completing processing of the subflow e and the subflow d by the two receiving nodes both based on the priority 1 and the time difference T3 (36 µs-26 µs=10 µs) in completing processing of the subflow e and the subflow d by the two receiving nodes both based on the priority 2.

For another example, the first receiving node may be the receiving node 122 in FIG. 4a and FIG. 4b, and the second receiving node may be the receiving node 121 in FIG. 4a and FIG. 4b. The receiving node 122 prioritizes processing of the subflow d (namely, the first subflow) based on the priority 2, and the receiving node 121 defers processing of the subflow c (namely, the second subflow) based on the priority 3. The time difference between the time for the receiving node 122 to complete processing of the subflow d and the time for the receiving node 121 to complete processing of the subflow c is 0 µs (namely, 26 µs minus 26 µs). The time difference T1 is less than the time difference T2 (26 µs-16 µs=10 µs) in completing processing of the subflow d and the subflow c by the two receiving nodes both based on the priority 2 and the time difference T3 (36 µs-26 µs=10 µs) in completing processing of the subflow d and the subflow c by the two receiving nodes both based on the priority 2.

For another example, the first receiving node may be the receiving node 123 in FIG. 4a and FIG. 4b, and the second receiving node may be the receiving node 121 in FIG. 4a and FIG. 4b. The receiving node 123 prioritizes processing of the subflow e (namely, the first subflow) based on the priority 1, and the receiving node 121 defers processing of the subflow c (namely, the second subflow) based on the priority 3. The time difference between the time for the receiving node 121 to complete processing of the subflow e and the time for the receiving node 121 to complete processing of the subflow c is 4 µs (namely, 30 µs minus 26 µs). The time difference T1 is less than the time difference T2 (30 µs-10 µs=20 µs) in completing processing of the subflow e and the subflow c by the two receiving nodes both based on the priority 1 and the time difference T3 (46 µs-26 µs=20 µs) in completing processing of the subflow e and the subflow c by the two receiving nodes both based on the priority 2.

In a possible design, in an aspect, the time difference T2 between the time for the first receiving node to complete processing of the first subflow based on the first priority and the time for the second receiving node to complete processing of the second subflow based on the first priority may be specifically a time difference T2 between the time for the first receiving node to complete processing of the first subflow and the time for the second receiving node to complete processing of first data.

The first data is data that carries the second priority identifier and that is received by the first receiving node before or after the first receiving node receives the first subflow.

The example in which the receiving node 122 in FIG. 3a and FIG. 3b is the first receiving node and the receiving node 121 in FIG. 3a and FIG. 3b is the second receiving node is used. The time difference T2 between the time for the receiving node 122 to complete processing of the subflow a based on the priority 1 and the time for the receiving node 121 to complete processing of the subflow b based on the priority 1 may be specifically a time difference between the time for the receiving node 122 to complete processing of the subflow a based on the priority 1 and the time for the receiving node 121 to complete processing of the first data (where the first data may be service data that includes the priority 1 and that is received by the receiving node 121 before or after the receiving node 121 receives the subflow b) based on the priority 1.

In another aspect, the time difference T3 between the time for the first receiving node to complete processing of the first subflow based on the second priority and the time for the second receiving node to complete processing of the second subflow based on the second priority may be specifically a time difference T2 between the time for the first receiving node to complete processing of second data and the time for the second receiving node to complete processing of the second subflow.

The second data is data that carries the first priority identifier and that is received by the second receiving node before or after the second receiving node receives the second subflow.

The example in which the receiving node 122 in FIG. 3a and FIG. 3b is the first receiving node and the receiving node 121 in FIG. 3a and FIG. 3b is the second receiving node is still used. The time difference T2 between the time for the receiving node 122 to complete processing of the subflow a based on the priority 2 and the time for the receiving node 121 to complete processing of the subflow b based on the priority 2 may be specifically a time difference between the time for the receiving node 122 to complete processing of the second data (where the second data may be service data that includes the priority 2 and that is received by the receiving node 122 before or after the receiving node 122 receives the subflow a) based on the priority 2 and the time for the receiving node 121 to complete processing of the subflow b based on the priority 2.

In the foregoing design, the following is considered: In an actual application process, when processing a subflow, a receiving node needs to process the subflow based only on one priority (to be specific, a priority corresponding to a priority identifier carried in the subflow). For example, when the first receiving node prioritizes processing of the first subflow based on the first priority (that is, S3031), the first receiving node does not need to process the first subflow based on the second priority again. Similarly, when the second receiving node prioritizes processing of the second subflow based on the second priority (that is, S3032), the second receiving node does not need to process the second subflow based on the first priority again.

Therefore, when the first receiving node prioritizes processing of the first subflow based on the first priority, the time for the first receiving node to complete processing of other service data (where for example, the other service data may be service data that carries the second priority identifier and that is received by the first receiving node before or after the first receiving node receives the first subflow) based on the second priority may be used to reflect the time for the first receiving node to complete processing of the first subflow based on the second priority.

The example in which the receiving node 122 in FIG. 3a and FIG. 3b is the first receiving node and the receiving node 121 in FIG. 3a and FIG. 3b is the second receiving node is used. When the receiving node 122 prioritizes processing of the subflow a based on the priority 1, the time for the receiving node 122 to complete processing of other service data (where the service data may be service data that includes the priority 2 and that is received by the receiving node 122 before or after the receiving node 122 receives the subflow a) based on the priority 2 may be used to reflect the time for the receiving node 122 to complete processing of the subflow a based on the priority 2.

Similarly, when the second receiving node prioritizes processing of the second subflow based on the second priority, the time for the second receiving node to complete processing of other service data (where for example, the other service data may be service data that carries the first priority identifier and that is received by the second receiving node before or after the second receiving node receives the second subflow) based on the first priority may be used to reflect the time for the second receiving node to complete processing of the first subflow based on the first priority.

The example in which the receiving node 122 in FIG. 3a and FIG. 3b is the first receiving node and the receiving node 121 in FIG. 3a and FIG. 3b is the second receiving node is still used. When the receiving node 121 prioritizes processing of the subflow a based on the priority 2, the time for the receiving node 121 to complete processing of other service data (where the service data may be service data that includes the priority 1 and that is received by the receiving node 121 before or after the receiving node 121 receives the subflow b) based on the priority 1 may be used to reflect the time for the receiving node 122 to complete processing of the subflow a based on the priority 2.

After the receiving nodes complete processing of the subflows, the following steps may be further included.

S304: After completing processing of the subflows, the receiving nodes send feedback messages to the sending node 110.

For example, in the example shown in FIG. 3a and FIG. 3b, after completing processing of the subflow a and the subflow b, the receiving node 121 and the receiving node 122 may send feedback messages to the sending node 110, to indicate that processing of the subflows is completed. For another example, in the example shown in FIG. 4a and FIG. 4b, after completing processing of the subflow c, the subflow d, and the subflow e, the receiving node 121, the receiving node 122, and the receiving node 123 may send feedback messages to the sending node 110, to indicate that processing of the subflows is completed.

S305: After receiving the feedback messages sent by the receiving nodes, the sending node releases a resource corresponding to the coflow K.

For example, after receiving the feedback messages sent by all the receiving nodes, the sending node determines that execution of the coflow K is completed, and then releases a memory resource occupied by the coflow K.

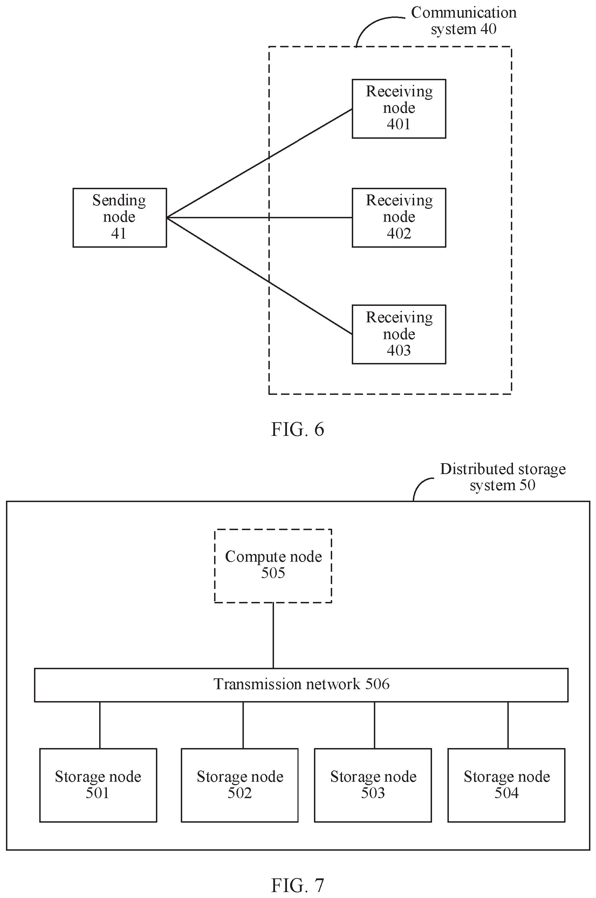

In FIG. 5, the structure of the communication system 10 shown in FIG. 1 is mainly used as an example to describe a running process of the communication system provided in this embodiment of this application. In the communication system 10 shown in FIG. 1, the sending node 110 and the plurality of receiving nodes may be respectively used as components of the communication system 10. In another implementation, the communication system provided in this embodiment of this application may not include a software/hardware apparatus that performs a function of the sending node 110. For example, FIG. 6 is a diagram of a structure of another communication system according to an embodiment of this application.

The communication system 40 includes a plurality of receiving nodes (for example, a receiving node 401, a receiving node 402, and a receiving node 403 in the figure).

A function of each receiving node may be implemented by an electronic device like a personal computer (including a desktop computer, a laptop computer, a handheld computer, a notebook computer, and the like), an ultra-mobile personal computer (ultra-mobile personal computer, UMPC), a network interface card, or a server. Alternatively, the function of each receiving node may be implemented by a hardware apparatus (for example, a chip) or a software apparatus (for example, a virtual machine) running on the foregoing electronic device.

The receiving nodes may interact with a sending node 41 outside the communication system 40 over a transmission network. For example, the sending node 41 may be a client having permission to access the communication system 40, and the client may interact with the receiving nodes over the transmission network.

When the communication system 40 is configured to execute a coflow service, the sending node 41 may obtain subflows in the coflow with reference to content in S301, and send subflows including priority identifiers to the receiving nodes in the communication system 40 with reference to content in S302. In addition, the sending node 110 may further determine the priority identifiers included in the subflows with reference to content in S601 and S602.

After receiving the subflows from the sending node 41, the receiving nodes in the communication system 40 may process, with reference to content in S303, the subflows based on priorities corresponding to the priority identifiers included in the subflows. In the receiving nodes in the communication system 40, there may be at least two receiving nodes whose processing of subflows conform to content in S3031 and S3032.

In addition, after completing processing the subflows, the receiving nodes may send feedback messages to the sending node 41 with reference to content in S304. After receiving the feedback messages from the receiving nodes, the sending node 41 may release a resource with reference to content in S305.

In an implementation, the following is considered: In a distributed storage system, data may be stored in a plurality of storage nodes in the distributed storage system in a coflow manner. For example, when data is stored in a multi-replica manner, a plurality of data replicas may be respectively sent, in a coflow manner, to different storage nodes for storage. For another example, when data is stored in an erasure code (erasure code, EC) manner, a data block and a check block in an EC code block may be respectively sent, in a coflow manner, to different storage nodes for storage.

Therefore, the running process of the communication system shown in FIG. 5 may be applied to the distributed storage system, so that resource utilization efficiency is improved when data is stored in the distributed storage system in a coflow manner.

FIG. 7 is a diagram of a structure of a distributed storage system according to an embodiment of this application. The distributed storage system 50 includes a plurality of storage nodes configured to store data (for example, four storage nodes: a storage node 501, a storage node 502, a storage node 503, and a storage node 504 in the figure), and one or more compute nodes configured to provide computational power (for example, one compute node: a compute node 505 in the figure). The storage nodes and the compute node may be connected over a transmission network 506. In an actual application process, the storage nodes and the compute node in the distributed storage system 50 each may be a device like a server or a desktop computer.

It may be understood that FIG. 7 merely provides an example of a system architecture of the distributed storage system. In a specific implementation process, the distributed storage system to which the technical solution provided in this embodiment of this application is applied may alternatively use another system architecture. For example, when the storage node in the distributed storage system is a device that has both a computing capability and a storage capability, the storage node may implement a function of the compute node 505. In this case, the distributed storage system may not include the compute node 505. In addition, when the storage node in the distributed storage system is a device that has both a computing capability and a storage capability, the compute node 505 may alternatively run on the storage node in a form of a virtual machine. In this case, the distributed storage system may alternatively not include a compute node independent of the storage node. The technical solution provided in this embodiment of this application may be applied to distributed storage systems of different system architectures.

In addition, when the distributed storage system 50 runs, the compute node 505 may send data generated in an operation process to the storage node for storage, and the compute node 505 may read, from the storage node, data needed for an operation. In addition, each storage node may further receive an access request from a device other than the compute node, and read and write data based on the access request. For example, each storage node may receive an access request from another storage node in the distributed storage system, and read and write data based on the access request. For another example, each storage node may receive an access request from a device outside the distributed storage system, and read and write data based on the access request.

The following describes, by using three implementation processes, an implementation process of applying the running process of the communication system shown in FIG. 5 to the distributed storage system.

In a first implementation process, in the distributed storage system 50, when the compute node 505 sends data to the plurality of storage nodes and the plurality of storage nodes store the data, the compute node 505 may be configured to implement a function of the sending node 110 in FIG. 5, and each storage node may be configured to implement a function of each receiving node in FIG. 5.

Specifically, the compute node 505 may obtain subflows in a coflow with reference to content in S301 (for example, when the storage nodes perform data storage in a multi-replica manner, the subflows may separately include replica data; and for another example, when the storage nodes perform data storage in an EC manner, the subflows may separately include some data blocks or check blocks), and send subflows including priority identifiers to the storage nodes in the distributed storage system 50 with reference to content in S302. In addition, the compute node 505 may further determine the priority identifiers included in the subflows with reference to content in S601 and S602.

After receiving the subflows from the compute node 505, the storage nodes in the distributed storage system 50 may process, with reference to content in S303, the subflows based on priorities corresponding to the priority identifiers included in the subflows (where processing the subflows may include: the storage nodes determining a sequence of the subflows based on the priorities corresponding to the priority identifiers included in the subflows, and writing data in the subflows into a storage medium based on the sequence). In the storage nodes in the distributed storage system 50, there may be at least two storage nodes whose processing of subflows conform to content in S3031 and S3032. In addition, after completing data writing, the storage nodes may send feedback messages to the compute node 505 with reference to content in S304. After receiving the feedback messages from the storage nodes, the compute node 505 may release a resource with reference to content in S305.

In a second implementation process, the following is considered: In the distributed storage system, alternatively, one storage node may send data to a plurality of other storage nodes, and the plurality of storage nodes store the data. For example, when a storage node has a computing capability, the storage node may send data generated during calculation to a plurality of storage nodes for storage. For another example, when the compute node needs to store data, the compute node may first send the data to one storage node in the distributed storage system, and then the storage node sends the data to a plurality of storage nodes for storage.

Therefore, in this embodiment of this application, refer to the execution process shown in FIG. 5. Data may be sent by one storage node to a plurality of other storage nodes, and stored by the plurality of storage nodes.

For example, the storage node 501 sends data to the storage node 502, the storage node 503, and the storage node 504, and the storage node 502, the storage node 503, and the storage node 504 store the data.

In an aspect, the storage node 501 may determine subflows in a coflow with reference to content in S301 and S302, and send the subflows including priority identifiers to the storage nodes in the distributed storage system 50 (for example, when the storage nodes perform data storage in a multi-replica manner, the subflows may separately include the priority identifier and replica data; and for another example, when the storage nodes perform data storage in an EC manner, the subflows may separately include the priority identifier and a data block or a check block). In addition, the storage node 501 may further determine priority identifiers included in the subflows with reference to content in the following S601 and S602.

In another aspect, after receiving the subflows from the storage node 501, the storage node 502, the storage node 503, and the storage node 504 may process, with reference to content in S303, the subflows based on priorities corresponding to the priority identifiers included in the subflows (where processing the subflows may include: the storage nodes determining a sequence of the subflows based on the priorities corresponding to the priority identifiers included in the subflows, and writing data in the subflows into a storage medium based on the sequence). There may be at least two storage nodes whose processing of subflows conform to content in S3031 and S3032. In addition, after completing data writing, the storage nodes may send feedback messages to the storage node 501 with reference to content in S304. After receiving the feedback messages from the storage nodes, the storage node 501 may release a resource with reference to content in S305.

In a third implementation process, the following is considered: A device outside the distributed storage system may send data to a plurality of other storage nodes, and the plurality of storage nodes store the data. Therefore, in this embodiment of this application, refer to the execution process shown in FIG. 5. Data may be sent by a device outside the distributed storage system to a plurality of other storage nodes, and stored by the plurality of storage nodes. For a specific process, refer to the foregoing process in which the compute node 505 sends the data to the plurality of storage nodes and the plurality of storage nodes store the data or the foregoing process in which the storage node 501 sends the data to the plurality of storage nodes and the plurality of storage nodes store the data. Repeated content is not described herein again.

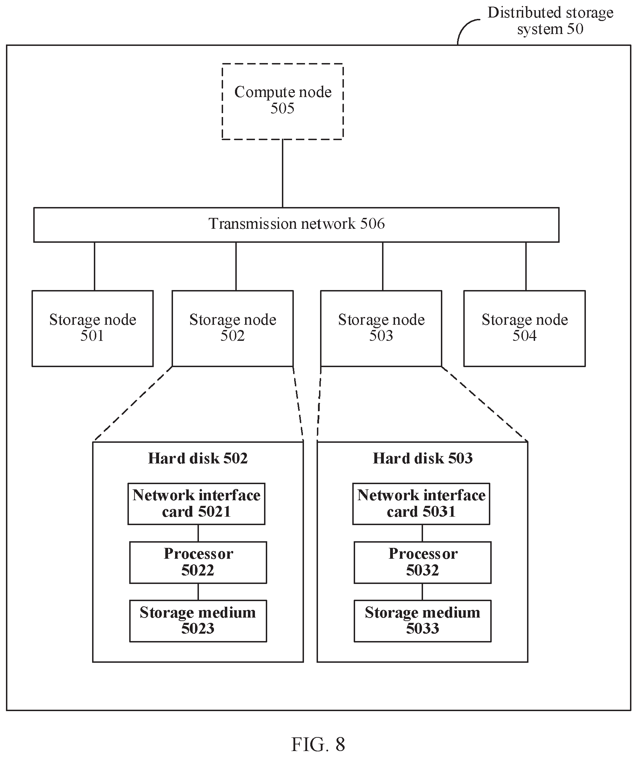

In addition, in a possible design, some or all functions of the storage node in the distributed storage system in this embodiment of this application may be implemented by a hard disk that has a data processing capability and a communication capability. For example, as shown in FIG. 8, in the distributed storage system 50, the storage node 502 and the storage node 503 may be respectively a hard disk 502 and a hard disk 503.

The hard disk 502 may include a network interface card 5021 configured to communicate with another node in the distributed storage system, a processor 5022 configured to process data, and a storage medium 5023 configured to store data. Similarly, the hard disk 503 may include a network interface card 5031 configured to communicate with another node in the distributed storage system, a processor 5032 configured to process data, and a storage medium 5033 configured to store data.

It should be noted that, in FIG. 8, the hard disk 502 and the hard disk 503 respectively include independent processors (to be specific, the processor 5022 and the processor 5032). In an actual application process, when processors are built in the network interface cards (to be specific, the network interface card 5021 and the network interface card 5031) in the hard disk 502 and the hard disk 503, the network interface card 5021 and the network interface card 5031 may alternatively execute a data processing task. In this case, the processor 5022 may be built in the network interface card 5021, and the processor 5032 may be built in the network interface card 5031.

When the running process of the communication system shown in FIG. 5 is applied to the distributed storage system, the hard disk 502 and the hard disk 503 may be configured to implement the functions of the receiving nodes in FIG. 5.

For example, in the foregoing first implementation process, after receiving the subflows from the compute node 505, the hard disk 502 and the hard disk 503 may respectively process, with reference to the content in S303, the subflows based on the priorities corresponding to the priority identifiers included in the subflows. For another example, in the foregoing second implementation process, after receiving the subflows from the storage node 501, the hard disk 502 and the hard disk 503 may respectively process, with reference to the content in S303, the subflows based on the priorities corresponding to the priority identifiers included in the subflows. For another example, in the foregoing third implementation process, after receiving the subflows from the device outside the distributed storage system 50, the hard disk 502 and the hard disk 503 may respectively process, with reference to the content in S303, the subflows based on the priorities corresponding to the priority identifiers included in the subflows.

In an aspect, when the first receiving node in S3031 is a hard disk serving as a storage node in the distributed storage system, for example, when the first receiving node is the hard disk 502,
the network interface card 5021 in the hard disk 502 is configured to receive, from a sending node (where in this case, the sending node may be specifically the compute node 505, another storage node in the distributed storage system 50, or the device outside the distributed storage system 50), a first subflow including a first priority identifier.

The processor 5022 is configured to process the subflow based on a first priority corresponding to the first priority identifier. For example, the processor 5023 is configured to: determine, based on the first priority, a sequence of processing the first subflow, and write data in the first subflow into the storage medium 5023 based on the sequence.

The storage medium 5023 is configured to store the data in the first subflow.

In another aspect, when the second receiving node in S3032 is a hard disk serving as a storage node in the distributed storage system, for example, when the second receiving node is the hard disk 503,
the network interface card 5031 in the hard disk 503 is configured to receive, from the sending node (where in this case, the sending node may be specifically the compute node 505, another storage node in the distributed storage system 50, or the device outside the distributed storage system 50), a second subflow including a second priority identifier.

The processor 5032 is configured to process the subflow based on a second priority corresponding to the second priority identifier. For example, the processor 5033 is configured to: determine, based on the second priority, a sequence of processing the second subflow, and write data in the second subflow into the storage medium 5033 based on the sequence.

The storage medium 5033 is configured to store the data in the second subflow.

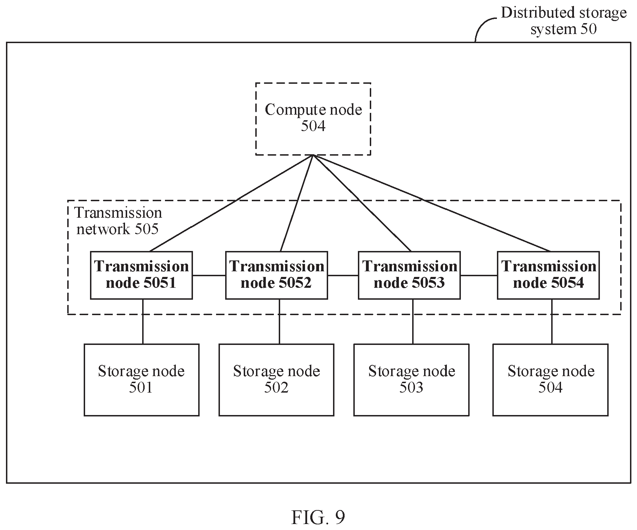

In addition, in a possible design, the following is considered: When the storage node accesses the distributed storage system via a transmission node, where for example, in FIG. 9, a storage node 501, a storage node 502, a storage node 503, and a storage node 504 may be respectively connected to a transmission node 5051, a transmission node 5052, a transmission node 5053, and a transmission node 5054, to access a distributed storage system 50, after receiving a subflow sent to each storage node, each transmission node may process, with reference to content in S303, the subflow based on a priority corresponding to a priority identifier in the subflow, so that utilization efficiency of scheduling resources of each transmission node and each storage node can be improved.

As shown in FIG. 9, the transmission node 5051, the transmission node 5052, the transmission node 5053, and the transmission node 5054 may form a transmission network 505.

The following uses the distributed storage system 50 in FIG. 9 as an example to describe a specific process in which a sending node (which may be specifically the compute node 504, the storage node in the distributed storage system 50, or the device outside the distributed storage system 50) sends data to the storage node 501, the storage node 502, the storage node 503, and the storage node 504 in the distributed storage system 50 and the storage nodes store the data.

First, the sending node may obtain subflows in a coflow with reference to content in S301 and S302, and send subflows including priority identifiers to the storage nodes (to be specific, the storage node 501, the storage node 502, the storage node 503, and the storage node 504).

Then, when the subflows are transmitted to the transmission nodes (to be specific, the transmission node 5051, the transmission node 5052, the transmission node 5053, and the transmission node 5054), the transmission nodes may process, with reference to the content in S303, the subflows based on priorities corresponding to the priority identifiers included in the subflows. Processing the subflows may specifically include: The transmission nodes determine a sequence of sending the subflows based on the priorities corresponding to the priority identifiers included in the subflows, and send the subflows to corresponding storage nodes based on the sequence.

In the transmission node 5051, the transmission node 5052, the transmission node 5053, and the transmission node 5054, there may be at least two transmission nodes whose processing of subflows conform to content in S3031 and S3032.

In an actual application process, the foregoing transmission node (for example, the transmission node 5051, the transmission node 5052, the transmission node 5053, or the transmission node 5054) connected to the storage node may be specifically a switch (for example, a top of rack (top of rack, TOR) switch or a spine (spine) switch), a router, a virtual switch, or the like. A specific form of the transmission node may not be limited in embodiments of this application.

With reference to an instance, the following describes a process in which the sending node 110 determines the priority identifier included in each subflow in the running process of the communication system shown in FIG. 5.

In this embodiment of this application, the following is considered: an FCT (referred to as a historical FCT below) of processing a data flow from the sending node 110 by each receiving node before the sending node 110 sends the coflow K may be used to predict an FCT of processing a subflow in the coflow K by each receiving node subsequently. For example, before the receiving node 121 receives the subflow in the coflow K, an FCT of processing the data flow from the sending node 110 by the receiving node 121 based on a priority (for example, the priority 1) in the scheduling policy is 10 µs. In this case, when the load of the receiving node 121 does not change dramatically, an FCT of processing the subflow in the coflow K by the receiving node 121 based on the priority 1 is also about 10 µs.

Further, for determining the priority identifiers included in the subflows in the coflow K, the priority identifiers included in the subflows may be determined based on historical FCTs when a plurality of receiving nodes (n receiving nodes are used as an example, where n is a positive integer greater than 1) corresponding to the coflow K process the data flows from the sending node 110. In this way, a processing completion time of processing the subflow by each receiving node based on the priority corresponding to the priority identifier may be close to a processing completion time of another receiving node in the n receiving nodes, so that a time difference in completing processing the subflows is reduced.

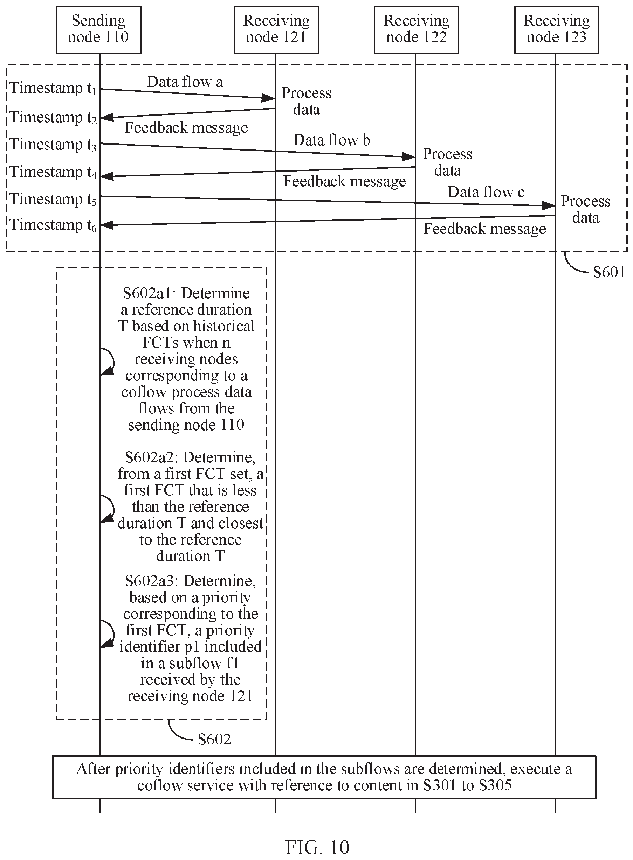

Specifically, as shown in FIG. 10, the running process of the communication system 10 may include the following steps.

S601: A sending node 110 obtains FCTs when receiving nodes process data flows from the sending node 110.

In a possible design, an FCT of processing the data flow from the sending node 110 by a receiving node may be determined based on a time difference between the time when the sending node 110 sends the data flow to the receiving node and the time when the sending node 110 receives a feedback message (where the feedback message indicates that processing of the data flow is completed) from the receiving node.

As shown in FIG. 10, when the sending node 110 sends a data flow a to a receiving node 121, a timestamp t₁ is recorded. In addition, when the sending node 110 receives a feedback message from the receiving node 121, a timestamp t₂ is recorded. In this case, an FCT of processing the data flow a from the sending node 110 by the receiving node 121 may be represented by t₂ - t₁.

Similarly, in FIG. 10, an FCT of processing a data flow b from the sending node 110 by a receiving node 122 may be represented by t₄ - t₃; and an FCT of processing a data flow c from the sending node 110 by a receiving node 122 may be represented by t₆ - t₅.

In addition, the FCTs obtained by the sending node 110 may specifically include FCTs of processing the data flow from the sending node 110 by the receiving node based on different priorities.

For example, when the sending node 110 sends the data flow a to the receiving node 121, a priority identifier is included in the data flow a, and the receiving node 121 may process the data flow a based on a priority (assuming that the priority is a priority 1) corresponding to the priority identifier, and send a feedback message after completing processing the data flow a. In this way, t₂ -t₁ may represent an FCT of processing the data flow from the sending node 110 by the receiving node 121 based on the priority 1.

For example, the FCTs when the receiving nodes process the data flows from the sending node 110 and that are obtained by the sending node 110 may be represented as content shown in the following Table 1.

**Table 1**

| | Receiving node 121 | Receiving node 122 | Receiving node 123 |
|---|---|---|---|
| Priority 1 | T₁₁ | T₁₂ | T₁₃ |
| Priority 2 | T₂₁ | T₂₂ | T₂₃ |
| ... | ... | ... | ... |
| Priority m | Tₘ₁ | Tₘ₂ | Tₘ₃ |

T₁₁ represents the FCT of processing the data flow from the sending node 110 by the receiving node 121 based on the priority 1, and T₂₁ represents an FCT of processing the data flow from the sending node 110 by the receiving node 121 based on the priority 2. The rest can be deduced by analogy.

S602: The sending node 110 determines, based on the historical FCTs when the receiving nodes process the data flows from the sending node 110, priority identifiers included in subflows.

The following describes an implementation process of S602 by using a process in which the sending node 110 determines a priority identifier (referred to as a priority identifier p1 below) included in a subflow (referred to as a subflow f1 below) received by the receiving node 121 as an example. Specifically, S602 may include the following step.

S602a: The sending node 110 determines, based on historical FCTs when n receiving nodes (where n is a positive integer greater than 1) corresponding to a coflow K process the data flows from the sending node 110, the priority identifier p1 included in the subflow f1 received by the receiving node 121.

The following separately describes a process of S602a by using two implementation processes.

In a first implementation process, in this embodiment of this application, the following is considered: In an aspect, a CCT of the coflow may be predicted by using the historical FCTs when the n receiving nodes corresponding to the coflow process the data flows from the sending node 110, so that a reference duration indicating the CCT of the coflow K is determined. In another aspect, the FCTs when the receiving nodes process the subflows can be less than the reference duration and as close as possible to the reference duration. In this way, a time difference in completing processing the subflows in the coflow K can be reduced. Therefore, S602a may be implemented by using the following processes of S602a1 to S602a3.

S602a1: The sending node 110 determines the reference duration T based on the historical FCTs when the n receiving nodes corresponding to the coflow process the data flows from the sending node 110.

The reference duration T indicates the CCT of the coflow K.

In a possible design, the reference duration T may satisfy the following Formula (1): $T = min \left({t}_{c 1},{t}_{c 2},…,{t}_{cm}\right)$ Formula (1)

*t_{cx}* represents a maximum value of historical FCTs when the receiving nodes process the data flows from the sending node 110 based on a priority x. For example, with reference to Table 1, *t*_{*c*1} satisfies the following Formula (2): ${t}_{c 1} = max \left({T}_{11}, {T}_{12}, {T}_{13}\right)$ Formula (2)

*t*_{*c*2} satisfies the following Formula (3): ${t}_{c 2} = max \left({T}_{21}, {T}_{22}, {T}_{23}\right)$ Formula (3)

*t_{cm}* satisfies the following Formula (4): ${t}_{cm} = max \left({T}_{m 1}, {T}_{m 2}, {T}_{m 3}\right)$ Formula (4)

For example, it is assumed that historical FCTs when the receiving node 121, the receiving node 122, and the receiving node 123 process the data flows from the sending node 110 are shown in the following Table 2.

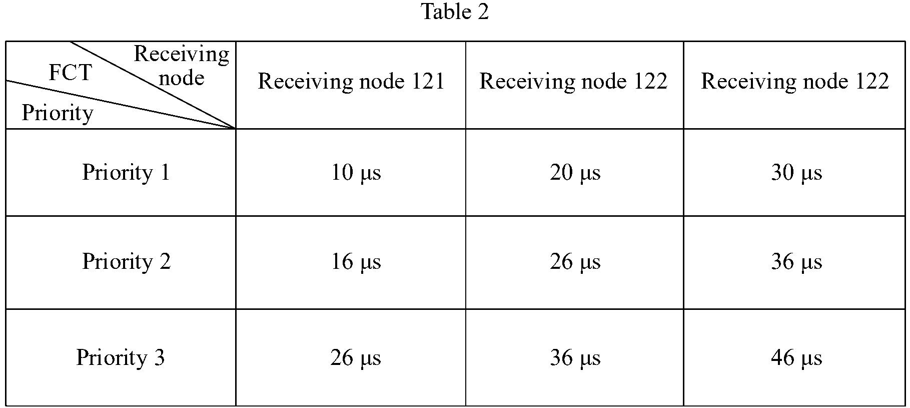

It can be learned that, a maximum value of historical FCTs when the three receiving nodes process the data flows from the sending node 110 based on the priority 1 is 30 µs (that is, max(10us, 20us, 30us) max(30us, 36us, 46us) ); a maximum value of historical FCTs when the three receiving nodes process the data flows from the sending node 110 based on the priority 2 is 36 µs (that is, max(16us, 26us, 36us)); and a maximum value of historical FCTs when the three receiving nodes process the data flows from the sending node 110 based on the priority 3 is 46 µs (that is, max(26us, 36us, 46us) ). In this case, the reference duration T is 30 µs (namely, max(30us, 36us, 46us) ).

S602a2: The sending node 110 determines, from an FCT set (referred to as a first FCT set below for ease of description), a first FCT that is less than the reference duration T and closest to the reference duration T.

The first FCT set includes historical FCTs of processing the data flow from the sending node 110 by the receiving node 121 based on different priorities.

For example, in Table 1, the historical FCT of processing the data flow from the sending node 110 by the receiving node 121 based on the priority 1 is T₁₁ , and the historical FCT of processing the data flow from the sending node 110 by the receiving node 121 based on the priority 2 is T₂₁ . The rest can be deduced by analogy. In this case, the first FCT set may include T₁₁ , T₂₁,..., and Tₘ₁ in Table 1.

Further, in T₁₁ , T₂₁,..., and Tₘ₁, the first FCT may be specifically the one that is less than the reference duration T and closest to the reference duration T.

The example shown in Table 2 is still used. In this case, the reference duration T is 30 µs, and the first FCT set includes 10 µs, 16 µs, and 26 µs. In this case, the first FCT that is less than 30 µs and closest to 30 µs is 26 µs.

S602a3: The sending node 110 determines, based on a priority corresponding to the first FCT, the priority identifier p1 included in the subflow f1 received by the receiving node 121 in the coflow K.

For example, assuming that the first FCT is T₁₁ in Table 1, the priority corresponding to the first FCT is the priority 1, and then it may be determined that the priority identifier p1 is an identifier corresponding to the priority 1.

The example shown in Table 2 is still used. The priority corresponding to the first FCT (namely, 26 µs) is the priority 3. In this case, it is determined that the priority identifier p1 is an identifier corresponding to the priority 3.

After the priority identifiers included in the subflows are determined with reference to the foregoing processes of S602a1 to S602a3, a coflow service may be executed with reference to content in S301 to S305.

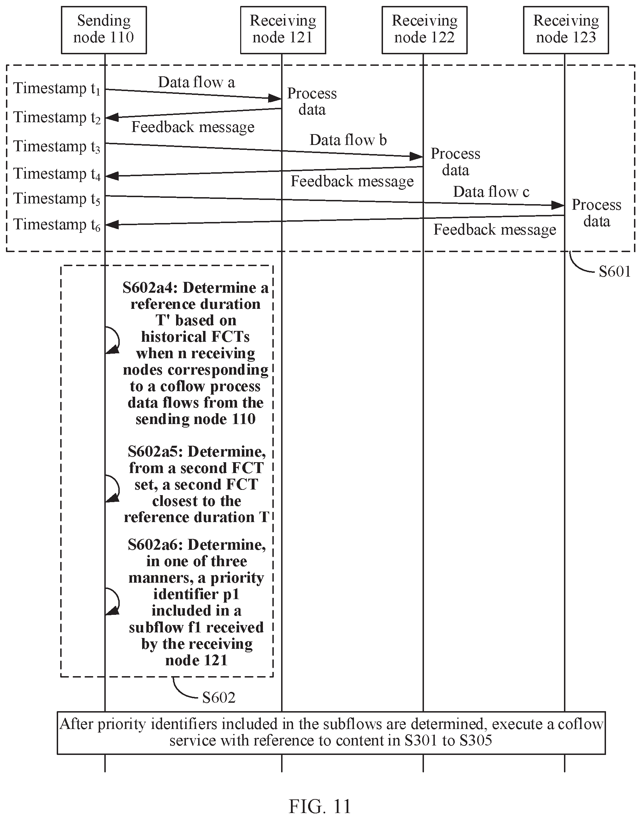

In a second implementation process, the following is considered: In an actual application process, the sending node 110 may not be able to completely obtain historical FCTs when the n receiving nodes process the data flows from the sending node 110 based on different priorities. For example, some data in Table 1 or Table 2 is missing. In this case, the reference duration T calculated by using the foregoing Formula (1) may not be able to accurately indicate the CCT of the coflow. Further, as shown in FIG. 11, S602a may be implemented by using the following processes S602a4 to S602a6.

S602a4: The sending node 110 determines a reference duration T' based on the historical FCTs when the n receiving nodes corresponding to the coflow process the data flows from the sending node 110.

The reference duration T' indicates the CCT of the coflow K.

For a process of calculating the reference duration T', refer to the foregoing process of calculating the reference duration T by using Formula (1). The missing data may not participate in the calculation.

For example, an example in which the n receiving nodes include the receiving node 121, the receiving node 122, and the receiving node 123 is used. Historical FCTs when the three receiving nodes process the data flows from the sending node 110 are shown in the following Table 3.

**Table 3**

| | Receiving node 121 | Receiving node 122 | Receiving node 123 |
|---|---|---|---|
| Priority 1 | / | T₁₂ | T₁₃ |
| Priority 2 | T₂₁ | T₂₂ | / |
| ... | ... | ... | ... |
| Priority m | Tₘ₁ | Tₘ₂ | Tₘ₃ |

Data of a historical FCT of processing the data flow from the sending node 110 by the receiving node 121 based on the priority 3 and data of a historical FCT of processing the data flow from the sending node 110 by the receiving node 123 based on the priority 2 are missing. In this case, the reference duration T' is calculated by using other data. For example, when the maximum value *t*_{*c*1} of the historical FCTs when the receiving nodes process the data flows from the sending node 110 based on the priority 1 is calculated based on Formula (2), T₁₁ is missing. In this case, *t*_{*c*m} may be determined by using *t_{cm}* = max(T_{*m*2}, T_{*m*3}) . Similarly, when *t*_{*c*2} is calculated based on Formula (3), *t*_{*c*2} may be determined by using *t*_{*c*2} = max(T₂₁, T₂₂) . Then, when the reference duration T' is calculated by using Formula (1), the foregoing *t*_{*c*1} and *t*_{*c*2} are used for the calculation.

S602a5: The sending node 110 determines, from an FCT set (referred to as a second FCT set below for ease of description), a second FCT closest to the reference duration T'.

The second FCT set includes historical FCTs of processing the data flow from the sending node 110 by the receiving node 121 based on different priorities. For example, in Table 3, the second FCT set includes T₂₁,..., and Tₘ₁. Further, in T₂₁,..., and Tₘ₁, the second FCT may be specifically the one closest to the reference duration T.

In addition, when the sending node 110 cannot obtain the historical FCTs of processing the data flow from the sending node 110 by the receiving node 121 based on different priorities, for example, the FCTs obtained by the sending node 110 are shown in Table 4.

**Table 4**

| | Receiving node 121 | Receiving node 122 | Receiving node 123 |
|---|---|---|---|
| Priority 1 | / | T₁₂ | T₁₃ |
| Priority 2 | / | T₂₂ | / |
| ... | / | ... | ... |
| Priority m | / | Tₘ₂ | Tₘ₃ |

All entries corresponding to the receiving node 121 are missing. In this case, a priority identifier of a preset priority may be used as the priority identifier p1. For example, a preset priority identifier corresponding to a priority $\frac{m}{2}$ in the middle of the m priorities may be used as the priority identifier p1.

S602a6: The sending node 110 determines, in one of the following three manners, the priority identifier p1 included in the subflow f1 received by the receiving node 121 in the coflow K.

Manner 1: When the second FCT is far less than the reference duration T' and the second FCT set does not include an FCT corresponding to a first target priority, it is determined that the priority identifier p1 is a priority identifier corresponding to the first target priority.

The first target priority is a priority that is one level lower than a priority corresponding to the second FCT.

In other words, when the second FCT is far less than the reference duration T', and the FCT corresponding to the first target priority is missing in the second FCT set, a priority of processing the subflow f1 by the receiving node 121 needs to be reduced, and then the priority identifier corresponding to the first target priority is used as the priority identifier p1.

In an implementation, that the second FCT is far less than the reference duration T' may specifically include: The second FCT satisfies the following Formula (5): $Second FCT < {D}_{k} < T ′$ Formula (5)

Dₖ satisfies the following Formula (6): ${D}_{k} = {α}_{1} \times {t}_{d 1} + {α}_{1} \times {t}_{d 2} + … + {α}_{m} \times {t}_{dm}$ Formula (6)

*t_{dx}* represents an average value of the historical FCTs when the receiving nodes process the data flows from the sending node 110 based on the priority x. For example, with reference to Table 1, *t*_{*d*1} satisfies the following Formula (7): ${t}_{d 1} = avg \left({T}_{11}, {T}_{12}, {T}_{13}\right)$ Formula (7)

*t*_{*c*2} satisfies the following Formula (3): ${t}_{d 2} = avg \left({T}_{21}, {T}_{22}, {T}_{23}\right)$ Formula (8)

*t_{cm}* satisfies the following Formula (4): ${t}_{dm} = avg \left({T}_{m 1}, {T}_{m 2}, {T}_{m 3}\right)$ Formula (9)

*αₓ* represents a weight of the priority x in a scheduling policy. For example, when the receiving nodes process the subflows in the coflow based on priorities in an SP scheduling policy, *α*₁*, α*₂*,..., and αₘ* are respectively weights of the priority 1, the priority 2, ..., and the priority m in the SP scheduling policy.

Manner 2: When the second FCT is greater than the reference duration T' and the second FCT set does not include an FCT corresponding to a second target priority, it is determined that the priority identifier p1 is a priority identifier corresponding to the second target priority.

The first target priority is a priority that is one level higher than the priority corresponding to the second FCT.

In other words, when the second FCT is higher than the reference duration T', and the FCT corresponding to the second target priority is missing in the second FCT set, a priority of processing the subflow f1 by the receiving node 121 needs to be improved, and then the priority identifier corresponding to the second target priority is used as the priority identifier p1.

Manner 3: When the second FCT does not satisfy conditions in Manner 1 and Manner 2, the priority identifier p1 included in the subflow f1 received by the receiving node 121 in the coflow K is determined based on the priority corresponding to the second FCT.

In other words, when the second FCT does not satisfy the conditions in Manner 1 and Manner 2, a priority identifier corresponding to a priority corresponding to the second FCT may be used as the priority identifier p1.

After the priority identifiers included in the subflows are determined with reference to the foregoing processes of S602a4 to S602a6, a coflow service may be executed with reference to content in S301 to S305.

In addition, in a possible design, after determining, based on content in S601 and S602, the priority identifiers included in the subflows in the coflow K, the sending node 110 may record, in a preset data set, the priority identifiers included in the subflows in the coflow K. In this way, when another coflow (which may be referred to as a coflow K1) is subsequently sent to the receiving nodes in the coflow K, the priority identifiers included in the subflows in the coflow K in the preset data set may be used as priority identifiers included in subflows in the coflow K1. This avoids a case in which the priority identifiers included in the subflows in the coflow K need to be determined based on the content in S601 and S602 each time a coflow is sent.

For example, the preset data set may be shown in the following Table 5:

**Table 5**

| | Receiving node 121, receiving node 122, and receiving node 123 | Receiving node 121 and receiving node 122 | ... |
|---|---|---|---|
| Receiving node 121 | p1 | p4 | ... |
| Receiving node 122 | p2 | p5 | ... |
| Receiving node 123 | p3 | / | ... |
| ... | ... | ... | ... |
| Receiving node n | / | ... | ... |

Table 5 records the priority identifiers in the subflows corresponding to the receiving nodes when the coflow is sent to the different receiving nodes. For example, when the sending node 110 sends the coflow to the receiving node 121, the receiving node 122, and the receiving node 123, it can be learned, by querying the table, that the subflow corresponding to the receiving node 121 includes the priority identifier p1, the subflow corresponding to the receiving node 122 includes the priority identifier p2, and the subflow corresponding to the receiving node 123 includes the priority identifier p3. For another example, when the sending node 110 sends the coflow to the receiving node 121 and the receiving node 122, it can be learned, by querying the table, that the subflow corresponding to the receiving node 121 includes the priority identifier p4, and the subflow corresponding to the receiving node 122 includes the priority identifier p5.

In addition, an embodiment of this application further provides a computer-readable storage medium. The computer-readable storage medium stores instructions. When the instructions are run on a sending node and a receiving node in a communication system, the communication system may perform all or some content of the method provided in S301 to S305 or S601 and S602 in embodiments of this application.

An embodiment of this application further provides a computer program product including instructions. When the computer program product runs on a sending node and a receiving node in a communication system, the communication system may perform all or some content of the method provided in S301 to S305 or S601 and S602 in embodiments of this application.

All or some of the functions, actions, operations, steps, and the like in the foregoing embodiments may be implemented by using software, hardware, firmware, or any combination thereof. When a software program is used to implement embodiments, embodiments may be implemented completely or partially in a form of a computer program product. The computer program product includes one or more computer instructions. When computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device. In addition, in embodiments, "at least one" means one or more, "a plurality of" means two or more, and other quantifiers are similar to the foregoing cases. The term "and/or" describes an association relationship between associated objects, and indicates that three relationships may exist. For example, A and/or B may indicate the following three cases: Only A exists, both A and B exist, and only B exists. In addition, an element (element) appearing in a singular form with "a", "an", or "the" does not mean "one or only one" unless otherwise specified in the context, but means "one or more than one". For example, "a device" means for one or more such devices. Furthermore, "at least one of (at least one of)..." means one or any combination of subsequent associated objects. For example, "at least one of A, B, and C" includes A, B, C, AB, AC, BC, or ABC. In the text descriptions of embodiments, the character "/" usually indicates an "or" relationship between associated objects. In a formula of embodiments, the character "/" indicates a "division" relationship between associated objects.

## Claims

1. A communication system, wherein the communication system comprises a sending node, a first receiving node, and a second receiving node, wherein
the sending node is configured to send a first subflow to the first receiving node, wherein the first subflow comprises a first priority identifier;
the sending node is further configured to send a second subflow to the second receiving node, wherein the second subflow comprises a second priority identifier, and the first subflow and the second subflow belong to a same coflow coflow;
the first receiving node is configured to prioritize processing of the first subflow based on a first priority corresponding to the first priority identifier; and
the second receiving node is configured to defer processing of the second subflow based on a second priority corresponding to the second priority identifier, such that a time difference between a completion time of processing the first subflow by the first receiving node and a completion time of processing the second subflow by the second receiving node satisfies at least one of the following: being less than a time difference between a completion time of processing the first subflow by the first receiving node based on the first priority and a completion time of processing the second subflow by the second receiving node based on the first priority, and being less than a time difference between a completion time of processing the first subflow by the first receiving node based on the second priority and a completion time of processing the second subflow by the second receiving node based on the second priority.

2. The communication system according to claim 1, wherein the communication system is a distributed storage system, and the first receiving node and the second receiving node are each a storage node in the distributed storage system.

3. The communication system according to claim 2, wherein the distributed storage system comprises a hard disk, the hard disk comprises a network interface card, a processor, and a storage medium, and the first receiving node and/or the second receiving node are each a hard disk in the distributed storage system;
when the first receiving node is a first hard disk in the distributed storage system, the network interface card in the first hard disk is configured to receive the first subflow, the processor in the first hard disk is configured to prioritize processing of the first subflow based on the first priority identifier, and the storage medium in the first hard disk is configured to store data in the first subflow; and
when the second receiving node is a second hard disk in the distributed storage system, the network interface card in the second hard disk is configured to receive the second subflow, the processor in the second hard disk is configured to defer processing of the second subflow based on the second priority identifier, and the storage medium in the second hard disk is configured to store the data in the first subflow.

4. The communication system according to claim 2 or 3, wherein the communication system is a distributed storage system, and the first receiving node and the second receiving node are each a transmission node connected to a storage node in the distributed storage system.

5. The communication system according to any one of claims 1 to 4, wherein
the sending node is further configured to determine the first priority identifier based on historical flow completion times FCTs when n receiving nodes corresponding to the coflow process data flows from the sending node, wherein n is a positive integer greater than 1.

6. The communication system according to claim 5, wherein that the sending node is further configured to determine the first priority identifier based on the historical flow completion times FCTs when the n receiving nodes corresponding to the coflow process the data flows from the sending node comprises:
the sending node is further configured to determine a reference duration based on the historical FCTs when the n receiving nodes corresponding to the coflow process the data flows from the sending node, wherein the reference duration indicates a CCT of the coflow;
the sending node is further configured to determine, from a first FCT set, a first FCT that is less than the reference duration and closest to the reference duration, wherein the first FCT set comprises historical FCTs corresponding to processing of the data flow from the sending node by the first receiving node based on different priorities; and
the sending node is further configured to determine the first priority identifier based on a priority corresponding to the first FCT.

7. A communication method, wherein the communication method is applied to a communication system, the communication system comprises a sending node, a first receiving node, and a second receiving node, and the method comprises:
sending, by the sending node, a first subflow to the first receiving node, wherein the first subflow comprises a first priority identifier;
sending, by the sending node, a second subflow to the second receiving node, wherein the second subflow comprises a second priority identifier, and the first subflow and the second subflow belong to a same coflow coflow;
prioritizing, by the first receiving node, processing of the first subflow based on a first priority corresponding to the first priority identifier; and
deferring, by the second receiving node, processing of the second subflow based on a second priority corresponding to the second priority identifier, such that a time difference between a completion time of processing the first subflow by the first receiving node and a completion time of processing the second subflow by the second receiving node satisfies at least one of the following: being less than a time difference between a completion time of processing the first subflow by the first receiving node based on the first priority and a completion time of processing the second subflow by the second receiving node based on the first priority, and being less than a time difference between a completion time of processing the first subflow by the first receiving node based on the second priority and a completion time of processing the second subflow by the second receiving node based on the second priority.

8. The communication method according to claim 7, wherein the method further comprises:
determining, by the sending node, the first priority identifier based on historical flow completion times FCTs when n receiving nodes corresponding to the coflow process data flows from the sending node, wherein n is a positive integer greater than 1.

9. The communication method according to claim 8, wherein the determining, by the sending node, the first priority identifier based on the historical flow completion times FCTs when the n receiving nodes corresponding to the coflow process the data flows from the sending node comprises:
determining, by the sending node, a reference duration based on the historical FCTs when the n receiving nodes corresponding to the coflow process the data flows from the sending node, wherein the reference duration indicates a CCT of the coflow;
determining, by the sending node from a first FCT set, a first FCT that is less than the reference duration and closest to the reference duration, wherein the first FCT set comprises historical FCTs corresponding to processing of the data flow from the sending node by the first receiving node based on different priorities; and
determining, by the sending node, the first priority identifier based on a priority corresponding to the first FCT.

10. The communication method according to any one of claims 7 to 9, wherein the communication system is a distributed storage system, and the first receiving node and the second receiving node are each a storage node in the distributed storage system.

11. The communication method according to claim 10, wherein the communication system is a distributed storage system, and the first receiving node and the second receiving node are each a transmission node connected to a storage node in the distributed storage system.

12. A computer-readable storage medium, wherein the storage medium stores a computer program, and when the computer program is executed by a sending node and a receiving node in a communication system, the communication system performs the method according to any one of claims 7 to 11.

13. A computer program product, wherein the computer program product comprises instructions, and when the instructions are run on a sending node and a receiving node in a communication system, the communication system performs the method according to any one of claims 7 to 11.
